# FASCICULE DE BREVET EUROPEEN

(11) **EP 0 779 869 B1**
(45) Date de publication et mention de la délivrance du brevet: **16.12.1998**
(21) Numéro de dépôt: 95927791.4
(22) Date de dépôt: 17.08.1995
(51) Int. Cl.: B60T 13/57

(54) **SERVOMOTEUR PNEUMATIQUE A CHARGE ET A HYSTERESIS REDUITES**
PNEUMATISCHER BREMSKRAFTVERSTÄRKER MIT REDUZIERTER BELASTUNG UND HYSTERESIS
REDUCED LOAD AND HYSTERESIS PNEUMATIC BRAKE SERVO

(30) Priorité: 08.09.1994 FR 9410727
(43) Date de publication de la demande: 25.06.1997
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR)
(74) Mandataire: Bentz, Jean-Paul
(86) Numéro de dépôt international: FR9501089
(87) Numéro de publication internationale: WO9607573

(56) Documents cités:
- WO-A-94/06660
- WO-A-94/29153
- DE-A- 4 120 118
- DE-A- 4 227 879

## Description

La présente invention concerne de façon générale les servomoteurs pneumatiques d'assistance au freinage.

Plus précisément, l'invention concerne un servomoteur pneumatique d'assistance au freinage du type de ceux qui comprennent : une enveloppe rigide dans laquelle une cloison mobile délimite une chambre avant et une chambre arrière; un piston creux dans lequel débouchent une première entrée reliée à une première source de pression délivrant une pression relativement haute, une seconde entrée reliée à la chambre avant du servomoteur et à une seconde source de pression délivrant une pression relativement basse, et une sortie reliée à la chambre arrière, dont la pression est à contrôler, ce piston étant susceptible d'être entraîné par la paroi mobile; et un clapet intégré au piston pour établir sélectivement une communication entre l'une quelconque des entrées et la sortie, ce clapet comprenant lui-même : un premier siège annulaire formé par une couronne interne du piston à l'extérieur de laquelle débouche la seconde entrée; un second siège annulaire, obturé axialement, monté dans le premier siège avec un jeu définissant un passage relié à la sortie, et coulissant axialement à l'intérieur de ce premier siège entre une position de repos, dans laquelle il est plus éloigné de la chambre avant que le premier siège annulaire, et une position d'actionnement, dans laquelle il est au moins aussi proche de la chambre avant que le premier siège annulaire; et un organe d'obturation de forme tubulaire présentant d'une part une partie postérieure montée étanche dans le piston à distance du premier siègeet dont l'intérieur est relié à la première source, et d'autre part une face active annulaire mobile suivant un axe du piston, sollicitée par une force élastique suivant une première direction axiale pointant vers la chambre avant, et propre à coopérer avec le second siège dans la position de repos de ce dernier pour relier la sortie à la seconde source à travers le passage, et avec le premier siège dans la position d'actionnement du second siège, pour relier la sortie à la première source à travers ce passage, tout en interdisant la communication entre les deux entrées dans tous les cas, la face active annulaire de l'organe d'obturation étant raccordée à la partie postérieure par son diamètre interne et percée d'au moins un orifice communiquant avec le passage formé entre les deux sièges, et le pourtour interne du piston et le bord de la face active de l'organe d'obturation étant conformés pour exercer l'un sur l'autre une pression de contact suffisante pour garantir une obturation étanche de l'un par l'autre pour une position au moins du second siège.

Un servomoteur de ce type est décrit dans le document de brevet international publié sous le numéro WO 94/04403, et parallèlement inventé de façon indépendante par le Déposant.

Un problème classiquement rencontré avec les servomoteurs connus, et même aussi avec le servomoteur décrit dans ce document réside dans le fait que les forces à vaincre pour actionner le servomoteur ne s'appliquent pas avec la même intensité ou dans le même sens lorsque le servomoteur retourne dans sa position de repos, ce qui fait apparaître une hystérésis indésirable dans le fonctionnement de ces servomoteurs.

L'invention se situe dans ce contexte et vise à réduire cette hystérésis indésirable.
A cette fin, le servomoteur de l'invention, par ailleurs conforme à la définition générique qui en est donnée dans le préambule ci-dessus, est essentiellement caractérisé en ce que le pourtour interne du piston et le bord de la face active de l'organe d'obturation sont conformés pour exercer l'un sur l'autre, lorsque le second siège est à distance de sa position d'actionnement, une pression de contact inférieure à celle qu'ils exercent lorsque le second siège est dans sa position d'actionnement.

Selon un premier mode de réalisation possible de l'invention, le bord de la face active de l'organe d'obturation porte une lèvre d'étanchéité, et le pourtour interne du piston, dans un plan voisin du premier siège et perpendiculaire à la première direction axiale, s'élargit au fur et à mesure que ce plan s'éloigne de ce siège et de la chambre avant.

Selon un second mode de réalisation possible de l'invention, le pourtour interne du piston porte un troisième siège sensiblement coplanaire avec le premier, la seconde entrée s'ouvrant entre le premier et le troisième siège, et le bord de la face active de l'organe d'obturation étant, dans un plan perpendiculaire à la première direction axiale, distant du pourtour interne du piston, sur la plus grande partie au moins de son périmètre.

Dans ce dernier cas, la face active de l'organe d'obturation est de préférence renforcée par un insert rigide qui s'étend sur une partie centrale de sa surface jusqu'en deçà d'une zone périphérique dans laquelle cette face active présente une surépaisseur destinée à venir en contact avec le troisième siège.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue schématique en coupe d'un système de freinage à assistance pneumatique utilisant un servomoteur classique, l'organe d'obturation étant représenté dans sa position de repos;
- la Figure 2 est une vue en coupe partielle d'un servomoteur conforme à un premier mode de réalisation de l'invention, l'organe d'obturation étant représenté dans sa position d'actionnement;
- la Figure 3 est une vue en coupe partielle d'un servomoteur conforme à un second mode de réalisation de l'invention, l'organe d'obturation étant représenté dans sa position d'actionnement; et
- la Figure 4 est une vue en coupe partielle représentant une variante de réalisation du servomoteur de la figure 3.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour pei'mettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon'étanche, par une cloison mobile 4 susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de basse pression D à travers une valve anti-retour 6.

La chambre arrière 3b est en revanche susceptible d'être sélectivement raccordée soit à la source de basse pression D, soit à une source de haute pression, par exemple à l'atmosphère A.

A cette fin, l'accès à la chambre arrière 3b est contrôlé par un clapet 7 et un plongeur 8, ce dernier étant relié une pédale de frein 9 par l'intermédiaire d'une tige de commande 10.

Lorsque la tige de commande 10 est en position de repos, en l'occurrence tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 11.

L'actionnement du plongeur 8 par un mouvement de la tige de commande 10 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique A, à travers un filtre 14.

La différence de pression entre les deux chambres, alors ressentie par la cloison mobile 4, exerce sur cette dernière une poussée qui tend à la déplacer vers la gauche et à lui permettre d'entraîner le piston 5 qui se déplace à son tour en comprimant le ressort 11.

L'effort de freinage exercé sur le plongeur 8 par la tige de commande 10, ou "force d'entrée", et l'effort d'assistance au freinage, ou "force d'assistance", résultant de la poussée de la cloison mobile 4, se conjuguent sur un disque de réaction 12 pour constituer une force d'actionnement transmise au maître-cylindre par l'intermédiaire d'une tige de poussée 13.

L'ensemble du clapet 7 et des organes qui interagissent avec lui constituent le dispositif de commande pneumatique du servomoteur.

Plus précisément, un tel dispositif comprend traditionnellement : trois voies 15, 16 et 17; le piston pneumatique 5 lui-même; des premier et second sièges annulaires 18, 19; et un organe d'obturation 21, de forme tubulaire.

Les trois voies comprennent elles-mêmes une première entrée 15 reliée à une première source délivrant une pression relativement haute, en l'occurrence la pression atmosphérique A, une seconde entrée 16 reliée à la chambre avant 3a du servomoteur et à une seconde source délivrant une pression relativement basse, en l'occurrence la dépression D, et une sortie 17 reliée à la chambre arrière 3b du servomoteur, et permettant de contrôler la pression dans cette chambre.

Chacune de ces voies débouche dans le piston pneumatique creux 5 pour permettre l'établissement d'une communication sélective entre l'une quelconque des entrées 15 et 16 et la sortie 17.

Le premier siège annulaire 18 est formé par une couronne interne du piston, à l'extérieur de laquelle débouche la seconde entrée 16, tandis que le second siège annulaire 19 est formé par la périphérie du plongeur 8, et se'trouve donc obturé axialement par le fond de ce plongeur.

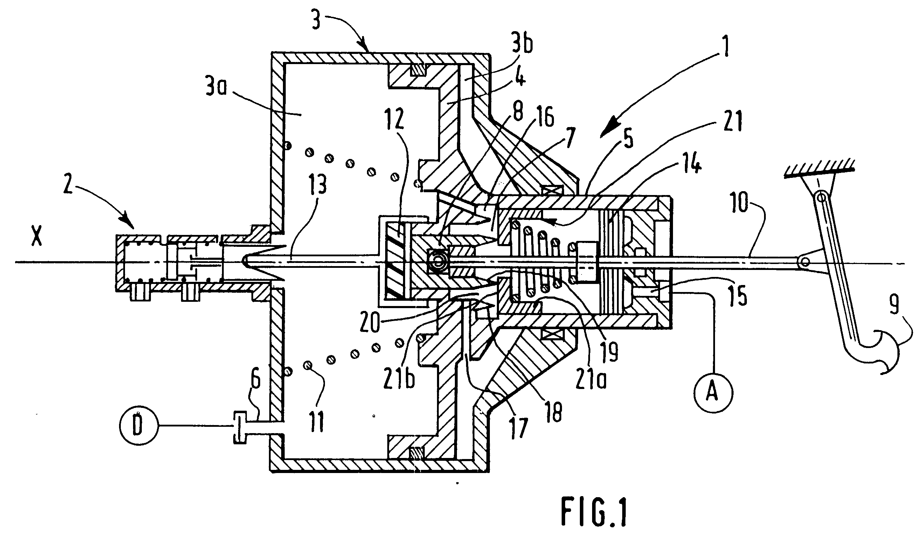

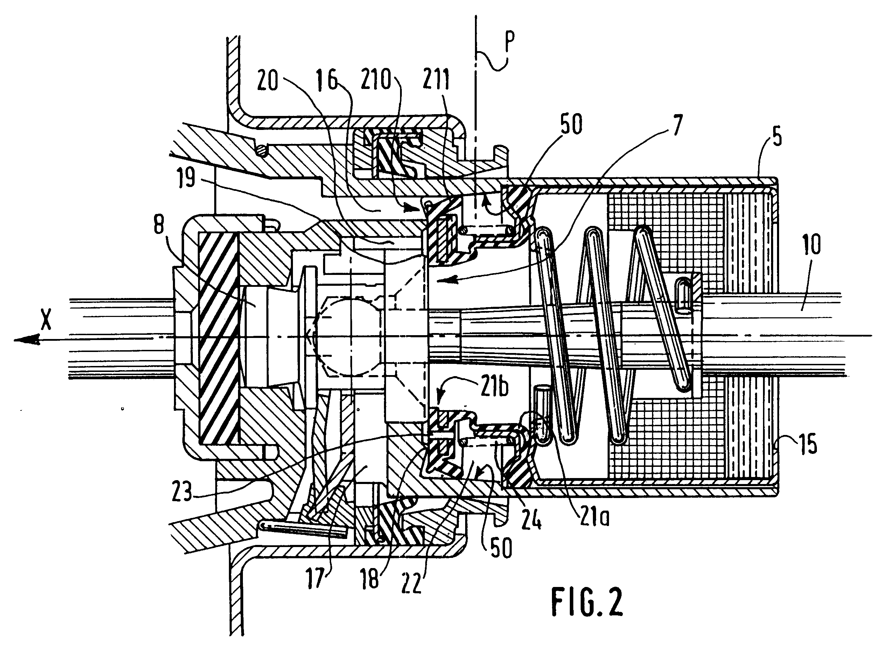

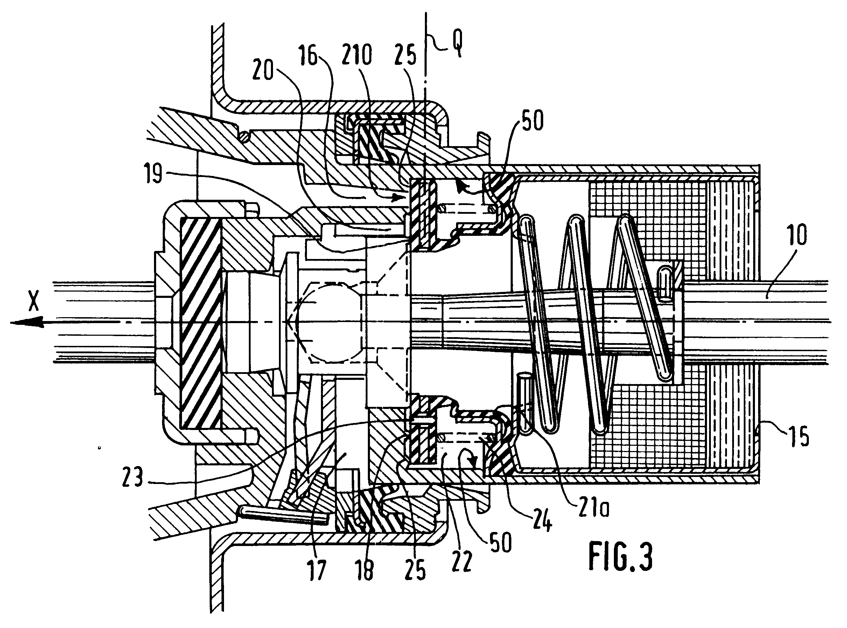

Grâce au coulissement du plongeur 8, le second siège 19 peut se déplacer entre une position de repos, dans laquelle il est plus éloigné de la chambre avant 3a que le premier siège annulaire 18, et qui est celle qu'illustrent les figures 1 et 2, et une position d'actionnement, dans laquelle il en est au moins aussi proche que ce premier siège 18, et qui est celle qu'illustre la figure 3.

Comme le montre la figure 1, le second siège 19 est disposé à l'intérieur du premier siège 18, avec un jeu qui permet de définir un passage 20 relié à la sortie 17.

L'organe d'obturation 21, de forme tubulaire, présente d'une part une partie postérieure 21a montée étanche dans le piston 5 à distance du premier siège 18 et dont l'intérieur est relié à la première source A, et d'autre part une face active annulaire 21b mobile suivant un axe du piston et sollicitée par une force élastique suivant une première direction axiale X pointant vers la chambre avant 3a.

La face active annulaire 21b coopère avec le second siège 19 dans la position de repos de ce dernier (figures 1 et 2) pour relier la sortie 17 à la seconde source D à travers le passage 20, et coopère avec le premier siège 18 dans la position d'actionnement du second siège 19 (figure 3), pour relier la sortie 17 à la première source A à travers ce même passage 20, toute communication entre les deux entrées 15 et 16 étant interdite quelle que soit la position du plongeur 8.

Plus précisément (figures 2 à 4), l'invention concerne un servomoteur dans lequel la face active annulaire 21b de l'organe d'obturation est raccordée à partie postérieure 21a par son diamètre interne et est percée d'au moins un orifice 23 communiquant avec le passage 20 formé entre les deux sièges 18, 19.

Par ailleurs, le pourtour interne 50 du piston 5 et le bord 210 de la face active de l'organe d'obturation 21 sont conformés pour exercer l'un sur l'autre une pression de contact suffisante pour garantir, dans certaines conditions au moins, une obturation étanche de l'un par l'autre, le pourtour interne 50 du piston, l'envers de la face active 21b et l'extérieur de la partie postérieure 21a de l'organe d'obturation 21 définissant alors ensemble une chambre 22 ouverte sur l'extérieur seulement à travers l'orifice 23.

Grâce à cet arrangement, le ressort 24 destiné à pousser l'organe d'obturation 21 dans la direction axiale X n'a en effet besoin que d'appliquer une force relativement faible par rapport à celle qu'il est nécessaire de prévoir dans un servomoteur plus classique tel que celui représenté sur la figure 1.

L'invention permet de perfectionner encore cet arrangement en prévoyant que le pourtour interne 50 du piston et le bord 210 de la face active 21b sont conformés pour exercer l'un sur l'autre, lorsque le second siège 19 est à distance de sa position d'actionnement, une pression de contact inférieure à celle qu'ils exercent lorsque ce second siège 19 est dans sa position d'actionnement, cette dernière position étant celle que représentent les figures 2 à 4.
Cette caractéristique de fonctionnement est obtenue, dans le cas où le bord 210 de la face active de l'organe d'obturation porte une lèvre d'étanchéité 211 (figure 2), en prévoyant que le pourtour interne 50 du piston, observé dans un plan de trace P voisin du premier siège 18 et perpendiculaire à la première direction axiale X, s'élargisse au fur et à mesure que ce plan s'éloigne de ce siège et de la chambre avant.

Par exemple, comme le montre la figure 2, le pourtour interne 50 peut adopter une forme tronconique qui s'évase vers l'arrière du servomoteur.

Dans ces conditions, le frottement de la lèvre 211 sur l'intérieur 50 du piston, qui est juste nécessaire pour garantir l'étanchéité de la chambre 22, ne se produit en pratique que pour la position d'actionnement représentée sur la figure 2, de sorte que le retour du servomoteur dans sa position de repos à la fin de l'actionnement ne fait apparaître aucune force de frottement parasite significative malgré la présence de la lèvre 211, dont la conformation naturelle favorise considérablement le coulissement vers l'avant par rapport au coulissement vers l'arrière.

La caractéristique de fonctionnement souhaitée peut aussi être obtenue, comme le montre le second mode de réalisation de l'invention représenté à la figure 3, en prévoyant que le pourtour interne 50 du piston porte un troisième siège 25 sensiblement coplanaire avec le premier siège 18, la seconde entrée 16 s'ouvrant entre les premier et troisième sièges 18, 25, et le bord 210 de la face active de l'organe d'obturation étant, dans un plan de trace Q perpendiculaire à la première direction axiale X, distant, sur la plus grande partie au moins de son périmètre, du poutour interne 50 du piston 5.

Dans ces conditions, le frottement du bord 210 de la face active de l'organe d'obturation sur l'intérieur 50 du piston est non seulement très faible mais aussi totalement inchangé entre la phase d'actionnement du servomoteur et la phase de retour à sa position de repos.

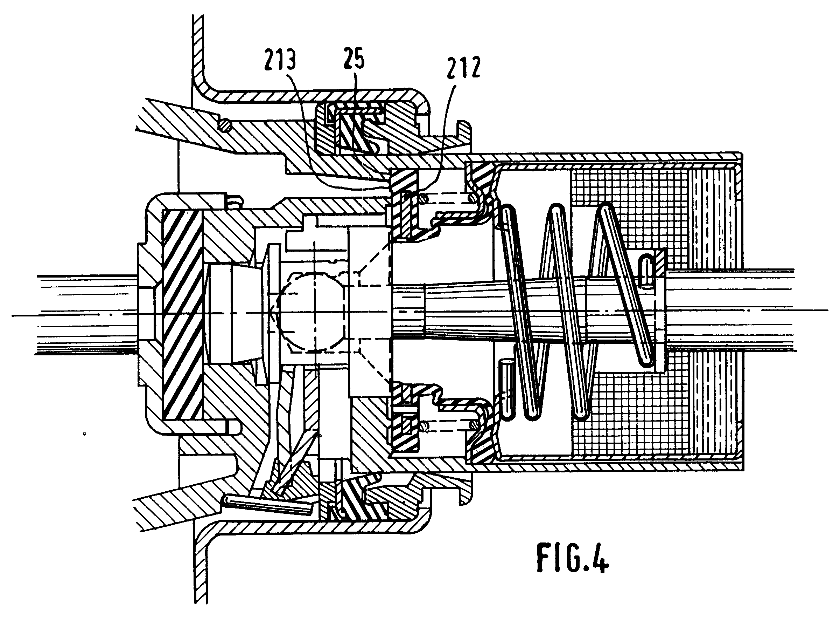

Une variante préférée de ce second mode de réalisation est représentée sur la figure 4.

Selon cette variante, la face active 21b de l'organe d'obturation 21 est renforcée par un insert rigide 212 qui s'étend sur une `partie centrale de sa surface jusqu'en deçà d'une zone périphérique dans laquelle cette face active présente une surépaisseur 213 destinée à venir en contact avec le troisième siège 25.

Cette disposition permet de s'affranchir plus aisément des tolérances dimensionnelles de fabrication, la surépaisseur 213 venant en contact de façon précoce avec le troisième siège 25 lors de l'actionnement du servomoteur, et le bord 210, non rigidifié par l'insert 212, se déformant ensuite pour permettre l'application de la face active 21b sur le premier siège 18.

## Revendications

1. Servomoteur pneumatique d'assistance au freinage, comprenant : une enveloppe rigide (3) dans laquelle une cloison mobile (4) délimite une chambre avant (3a) et une chambre arrière (3b); un piston creux (5) dans lequel débouchent une première entrée (15) reliée à une première source de pression (A) délivrant une pression relativement haute, une seconde entrée (16) reliée à la chambre avant (3a) du servomoteur et à une seconde source de pression (D) délivrant une pression relativement basse, et une sortie (17) reliée à la chambre arrière (3b), dont la pression est à contrôler, ce piston étant susceptible d'être entraîné par la paroi mobile; et un clapet (7) intégré au piston pour établir sélectivement une communication entre l'une quelconque des entrées (15, 16) et la sortie (17), ce clapet comprenant lui-même : un premier siège annulaire (18) formé par une couronne interne du piston à l'extérieur de laquelle débouche la seconde entrée (16); un second siège annulaire (19), obturé axialement, monté dans le premier siège (18) avec un jeu définissant un passage (20) relié à la sortie (17), et coulissant axialement à l'intérieur de ce premier siège (18) entre une position de repos, dans laquelle il est plus éloigné de la chambre avant (3a) que le premier siège annulaire (18), et une position d'actionnement, dans laquelle il est au moins aussi proche de la chambre avant (3a) que le premier siège annulaire (18); et un organe d'obturation (21) de forme tubulaire présentant d'une part une partie postérieure (21a) montée étanche dans le piston à distance du premier siège (18) et dont l'intérieur est relié à la première source (A), et d'autre part une face active annulaire (21b) mobile suivant un axe du piston, sollicitée par une force élastique suivant une première direction axiale (X) pointant vers la chambre avant (3a), et propre à coopérer avec le second siège (19) dans la position de repos de ce dernier pour relier la sortie (17) à la seconde source (D) à travers le passage (20), et avec le premier siège (18) dans la position d'actionnement du second siège (19), pour relier la sortie (17) à la première source (A) à travers ce passage, tout en interdisant la communication entre les deux entrées (15, 16) dans tous les cas, la face active annulaire (21b) de l'organe d'obturation (21) étant raccordée à la partie postérieure (21a) par son diamètre interne et percée d'au moins un orifice (23) communiquant avec le passage (20) formé entre les deux sièges (18, 19), et le pourtour interne (50) du piston et le bord (210) de la face active de l'organe d'obturation étant conformés pour exercer l'un sur l'autre une pression de contact suffisante pour garantir une obturation étanche de l'un par l'autre pour une position au moins du second siège (19), caractérisé en ce que le pourtour interne (50) du piston et le bord (210) de cette face active sont conformés pour exercer l'un sur l'autre, lorsque le second siège (19) est à distance de sa position d'actionnement, une pression de contact inférieure à celle qu'ils exercent lorsque le second siège (19) est dans sa position d'actionnement.

2. Servomoteur suivant la revendication 1, caractérisé en ce que le bord (210) de la face active de l'organe d'obturation porte une lèvre d'étanchéité (211), et en ce que le pourtour interne (50) du piston, dans un plan (P) voisin du premier siège (18) et perpendiculaire à la première direction axiale (X), s'élargit au fur et à mesure que ce plan s'éloigne de ce siège et de la chambre avant.

3. Servomoteur suivant la revendication 1, caractérisé en ce que le pourtour interne (50) du piston porte un troisième siège (25) sensiblement coplanaire avec le premier (18), la seconde entrée (16) s'ouvrant entre le premier et le troisième siège, et le bord (210) de la face active de l'organe d'obturation étant, dans un plan (Q) perpendiculaire à la première direction axiale (X), distant du poutour interne du piston, sur la plus grande partie au moins de son périmètre.

4. Servomoteur suivant la revendication 3, caractérisé en ce que la face active (21b) de l'organe d'obturation est renforcée par un insert rigide (212) qui s'étend sur une partie centrale de sa surface jusqu'en deçà d'une zone périphérique dans laquelle cette face active présente une surépaisseur (213) destinée à venir en contact avec le troisième siège (25).

## Claims

1. Pneumatic brake booster comprising: a rigid casing (3) in which a movable partition (4) delimits a front chamber (3a) and a rear chamber (3b); a hollow piston (5) into which there emerge a first inlet (15) connected to a first source (A) of pressure delivering a relatively high pressure, a second inlet (16) connected to the front chamber (3a) of the booster and a second source (D) of pressure delivering to a relatively low pressure and an outlet (17) connected to the rear chamber (3b) whose pressure is to be controlled, this piston being capable of being entrained by the movable wall; and a valve (7) incorporated into the piston in order to establish selectively a communication between either one of the inlets (15, 16) and the outlet (17), this valve itself comprising: a first annular seat (18) formed by an internal crown of the piston on the outside of which the second inlet (16) emerges; a second annular seat (19), closed off axially, mounted in the first seat (18) with clearance defining a passage (20) connected to the outlet (17), and sliding axially inside this first seat (18) between a position of rest, in which it is further from the front chamber (3a) than the first annular seat (18), and an actuating position, in which it is at least as close to the front chamber (3a) as the first annular seat (18); and a shut-off member (21) of tubular shape exhibiting, on the one hand, a posterior part (21a) mounted in leaktight fashion in the piston some distance from the first seat (18), and the inside of which is connected to the first source (A) and, on the other hand, an annular active face (21b) which can move along an axis of the piston, urged by an elastic force in a first axial direction (X) pointing towards the front chamber (3a) and able to interact with the second seat (19) in the position of rest of the latter in order to connect the outlet (17) to the second source (D) through the passage (20), and with the first seat (18) in the position of actuation of the second seat (19) in order to connect the outlet (17) to the first source (A) through this passage, while preventing communication between the two inlets (15, 16) in all cases, the annular active face (21b) of the shut-off member (21) being coupled to the posterior part (21a) by its internal diameter and pierced with at least one orifice (23) communicating with the passage (20) formed between the two seats (18, 19), and the internal perimeter (50) of the piston and the edge (210) of the active face of the shut-off member both being shaped in order to exert on one another a contact pressure which is sufficient to guarantee that one of them shuts off the other in leaktight fashion for at least one position of the second seat (19), characterized in that the internal perimeter (50) of the piston and the edge (210) of this active face are shaped in order to exert on one another when the second seat (19) is some distance from its actuating position, a contact pressure which is less than the one which they exert when the second seat (19) is in its actuating position.

2. Booster according to Claim 1, characterized in that the edge (210) of the active face of the shut-off member bears a sealing lip (211), and in that the internal perimeter (50) of the piston, in a plane (P) close to the first seat (18) and perpendicular to the first axial direction (X), widens out as this plane gets further away from this seat and from the front chamber.

3. Booster according to Claim 1, characterized in that the internal perimeter (50) of the piston bears a third seat (25) substantially coplanar to the first (18), the second inlet (16) opening out between the first and third seats, and the edge (210) of the active face of the shut-off member being, in a plane (Q) perpendicular to the first axial direction (X), distant from the internal perimeter of the piston, over at least most of its perimeter.

4. Booster according to Claim 3, characterized in that the active face (21b) of the shut-off member is reinforced by a rigid insert (212) which extends over a central part of its surface as far as beyond a peripheral region in which this active face exhibits an increase in thickness (213) which is intended to come into contact with the third seat (25).

## Patentansprüche

1. Pneumatischer Bremsunterstützungs-Servomotor mit einem starren Gehäuse (3), worin eine bewegliche Trennwand (4) eine vordere Kammer (3a) und eine hintere Kammer (3b) abgrenzt; einem Hohlkolben (5), in den ein erster Eingang (15) mündet, der an eine erste Druckquelle (A) angeschlossen ist, die einen relativ hohen Druck abgibt, und ein zweiter Eingang (16), der an die vordere Kammer (3a) des Servomotors und an eine zweite Druckquelle (D) angeschlossen ist, die einen relativ niedrigen Druck abgibt, und ein Ausgang (17), der an die hintere Kammer (3b) angeschlossen ist, deren Druck zu überwachen ist, wobei der Kolben von der beweglichen Wand mitgenommen werden kann; einem Ventilelement (7), das in den Zylinder integriert ist, um wahlweise zwischen einem beliebigen der Eingänge (15, 16) und dem Ausgang (17) eine Verbindung herzustellen, wobei das Ventilelement selbst umfaßt: einen ersten ringförmigen Sitz (18), der durch einen inneren Kranz des Kolbens ausgebildet ist, wobei der zweite Eingang (16) außerhalb des Kranzes mündet; einen zweiten ringförmigen Sitz (19), der axial verschlossen ist, mit einem spiel im ersten Sitz (18) befestigt ist, das einen Durchgang (20) bildet, der an den Ausgang (17) angeschlossen ist, und axial im Inneren des ersten Sitzes (18) zwischen einer Ruhestellung gleitet, in der er von der vorderen Kammer (3a) weiter entfernt ist als der erste ringförmige Sitz (18), und einer Betätigungsstellung, in der er der vorderen Kammer (3a) mindestens ebenso nah ist wie der erste ringförmige Sitz (18); und ein röhrenförmiges Verschlußmittel (21), das einerseits einen rückwärtigen Abschnitt (21a) aufweist, der vom ersten Sitz (18) beabstandet in dichter Weise in dem Zylinder untergebracht ist und dessen Inneres mit der ersten Druckquelle (A) verbunden ist, und andererseits eine ringförmige aktive Fläche (21b) aufweist, die entlang einer Achse des Kolbens bewegbar ist, von einer elastischen Kraft entlang einer ersten axialen Richtung (X) beaufschlagt ist, die zur vorderen Kammer (3a) gerichtet ist, und die geeignet ist, mit dem zweiten Sitz (19) in dessen Ruhestellung zusammenzuwirken, um den Ausgang (17) mit der zweiten Quelle (D) über den Durchgang (20) zu verbinden, und in der Betätigungsstellung des zweiten Sitzes (19) mit dem ersten Sitz (18), um den Ausgang (17) mit der ersten Quelle (A) über den Durchgang zu verbinden, wobei eine Verbindung zwischen den beiden Eingängen (15, 16) in allen Fällen verhindert wird, wobei die ringförmige aktive Fläche (21b) des Verschlußorgans (21) mit ihrem Innendurchmesser an den rückwärtigen Abschnitt (21a) angeschlossen und von mindestens einer Öffnung (23) durchbrochen ist, die mit dem Durchgang (20) in Verbindung steht, der zwischen den beiden Sitzen (18, 19) ausgebildet ist, und wobei der innere Umfang (50) des Kolbens und der Rand (210) der aktiven Fläche des Verschlußorgans so ausgebildet sind, daß der eine auf den anderen einen Kontaktdruck ausübt, der ausreicht, ein dichtes Verschließen des einen durch den anderen für eine Stellung zumindest des zweiten Sitzes (19) sicherzustellen; dadurch gekennzeichnet, daß der innere Umfang (50) des Kolbens und der Rand (210) der aktiven Fläche so ausgebildet sind, daß dann, wenn der zweite Sitz (19) von seiner Betätigungsstellung entfernt ist, ein Kontaktdruck aufeinander ausgeübt wird, der geringer als derjenige ist, den sie ausüben, wenn sich der zweite Sitz (19) in seiner Betätigungsstellung befindet.

2. Servomotor nach Anspruch 1, dadurch gekennzeichnet, daß der Rand (210) der aktiven Fläche des Verschlußorgans eine Dichtungslippe (211) trägt und daß sich der innere Umfang (50) des Kolbens in einer Ebene (P), die zum ersten Sitz (18) benachbart und senkrecht zur ersten axialen Richtung (X) ist, in dem Maße verbreitert, in dem sich die Ebene von dem Sitz und der vorderen Kammer entfernt.

3. Servomotor nach Anspruch 1, dadurch gekennzeichnet, daß der innere Umfang (50) des Kolbens einen dritten Sitz (25) trägt, der mit dem ersten (18) im wesentlichen koplanar ist, wobei sich der zweite Eingang (16) zwischen dem ersten und dem dritten Sitz öffnet, und wobei sich der Rand (210) der aktiven Fläche des Verschlußorgans in einer Ebene (Q) senkrecht zur ersten axialen Richtung (X) von dem inneren Umfang des Kolbens auf zumindest dem größten Abschnitt seines äußeren Umfangs entfernt befindet.

4. Servomotor nach Anspruch 3, dadurch gekennzeichnet, daß die aktive Fläche (21b) des Verschlußorgans durch einen starren Einsatz (212) verstärkt ist, der sich auf einem zentralen Abschnitt seiner Oberfläche bis diesseits einer Umfangszone erstreckt, in der die aktive Fläche eine Verdickung (213) aufweist, die dazu bestimmt ist, mit dem dritten Sitz (25) in Berührung zu kommen.
